# EUROPÄISCHE PATENTANMELDUNG

(11) **EP 2 878 428 A1**
(43) Veröffentlichungstag der Anmeldung: **03.06.2015**
(21) Anmeldenummer: 14193219.4
(22) Anmeldetag: 14.11.2014
(51) Int. Cl.: B29C 63/00, B27D 5/00

(54) **Verfahren sowie Vorrichtung zum Beschichten von Werkstücken**

(30) Priorität: 29.11.2013 DE 102013224599
(71) Anmelder: Homag Holzbearbeitungssysteme GmbH, 72296 Schopfloch (DE)
(72) Erfinder: Schmid, Johannes, 72181 Starzach (DE); Fritz, Marcus, 72280 Dornstetten (DE)
(74) Vertreter: Hoffmann Eitle

(57) **Zusammenfassung**

Die vorliegende Erfindung betrifft ein Verfahren, eine Verwendung sowie eine Vorrichtung zum Beschichten von Werkstücken (1). Hierbei handelt es sich um insbesondere plattenförmige Werkstücke (1) aus beispielsweise Holz, Holzwerkstoffen, Kunststoff oder dergleichen, die im Bereich der Möbel- oder Bauelementeindustrie zum Einsatz kommen. Im Rahmen der Erfindung wird eine hydrophobierende Flüssigkeit (8) zumindest in einem Randbereich, insbesondere in einem Kantenbereich, der zu beschichtenden Werkstückoberfläche aufgetragen.

## Beschreibung

### Technisches Gebiet

Die vorliegende Erfindung betrifft ein Verfahren, eine Verwendung sowie eine Vorrichtung zum Beschichten von Werkstücken. Hierbei handelt es sich um insbesondere plattenförmige Werkstücke aus beispielsweise Holz, Holzwerkstoffen, Kunststoff oder dergleichen, die im Bereich der Möbel- oder Bauelementeindustrie zum Einsatz kommen.

### Stand der Technik

Bei beschichteten Werkstücken, die eine Kernlage aus einem Holzwerkstoff und eine daran angebrachte Decklage aufweisen, ist die ebenfalls beschichtete Schmalfläche bzw. insbesondere der Übergangsbereich zwischen Schmalfläche und Breitfläche (Kantenbereich) besonders empfindlich gegenüber Feuchtigkeit. Zum Verschluss der Schmalflächen werden in der Regel Klebstoffe, wie Polyurethanklebstoffe, verwendet, und je nach Anforderung werden feuchtigkeitsbeständige Dichtungsmaterialien unterschiedlicher Qualität eingesetzt.

Allerdings kommt es beim Fertigungsprozess insbesondere durch spanende Bearbeitungsvorgänge im Bereich der Schmalflächen zu Fehlstellen, bei denen zum Beispiel die Oberfläche der Werkstückplatte feine Haarrisse aufweist, und/oder der Haftmittelauftrag verschließt die Schmalfläche nicht vollständig. Dies führt dazu, dass im Kantenbereich bzw. auch im Bereich der Schmalfläche Feuchtigkeit in das Werkstück eindringen kann und dieses schädigt. Auch kann sich die aufgebrachte Beschichtung ablösen oder abschnittsweise aufquellen.

Im Stand der Technik ist es bekannt, zwischen dem Formatieren, also der spanenden Bearbeitung zur Aufbereitung eines Werkstücks, und dem Beschichten neben den bekannten Klebstoffen auch Lacke auf die noch nicht versiegelte Schmalfläche des Werkstücks aufzubringen. Diese Variante ist jedoch vorrichtungstechnisch schwer zu handhaben, und darüber hinaus relativ teuer. Ferner lässt sich nicht vermeiden, dass die zusätzlich aufgebrachte Beschichtung in der Werkstückoberfläche als kleiner sichtbarer Strich verbleibt. Dies hat insbesondere bei dünnen Beschichtungsmaterialien den Nachteil, dass die Optik deutlich leidet.

Als Stand der Technik ist die DE 10 2007 061 076 A1 bekannt, die auf ein Verfahren zur Versiegelung eines plattenförmigen Werkstoffsubstrats gerichtet ist. Zur Versiegelung des für den Feuchtigkeitseintritt kritischen Kantenbereichs wird eine Versieglungsmasse verwendet, bei der es sich beispielsweise um einen thermoplastischen oder reaktiven Schmelzklebstoff handelt. Neben den thermoplastischen Schmelzklebstoffen können auch feuchtigkeitsvernetzende und/oder strahlenvernetzende Schmelzklebstoffe zur Anwendung kommen.

Ferner ist die DE 10 2006 046 797 A1 bekannt, die ein Verfahren zum gleichmäßigen Auftrag eines Passivierungsmittels oder sonstigen flüssigen Beschichtungsmittel auf ein in Breite und Höhe variable Werkstück zeigt, wobei das Werkstück mit hoher Geschwindigkeit transportiert wird und das Passivierungsmittel in einer Applikationskammer auf das Werkstück aufgetragen wird, wobei bei dem Auftragen des Passivierungsmittels in der Applikationskammer ein Unterdruck vorliegt.

### Gegenstand der Erfindung

Ziel der vorliegenden Erfindung ist es, ein Verfahren, eine Verwendung sowie eine Vorrichtung bereitzustellen, mit denen eine Versiegelung an einer Fläche eines Werkstücks aufgebracht werden kann, die das optische Äußere des beschichteten Werkstücks nicht beeinflusst, gleichzeitig jedoch einen effektiven Schutz vor Feuchtigkeit bietet.

Der Gegenstand des Anspruchs 1 stellt ein entsprechendes Verfahren bereit. Ferner wird nach Anspruch 9 eine vorrichtungstechnische Lösung aufgezeigt. Weitere bevorzugte Ausführungsformen sind den abhängigen Ansprüchen zu entnehmen, wobei auch die in den abhängigen Verfahrensansprüchen genannten Merkmale mit den Vorrichtungsmerkmalen kombiniert werden können, und umgekehrt.

Bei dem im Rahmen der Erfindung angesprochenen Beschichtungsmaterial handelt es sich bevorzugt um streifen- und stabförmiges Beschichtungsmaterial.

Kerngedanke der vorliegenden Erfindung ist es, mindestens in demjenigen Bereich eines Werkstücks, wo eine Beschichtung abschließt (insbesondere also die Kante im Übergangsbereich zwischen Schmalfläche und Hauptfläche eines Werkstücks), eine hydrophobierende Flüssigkeit vorzusehen.

Die in Anspruch 1 aufgezeigte Vorgehensweise hat den Vorteil, dass die Flüssigkeit am noch nicht beschichteten Abschnitt des Werkstücks teilweise in die Kernlage diffundiert, und dabei einen Schutzfilm ausbildet. Insbesondere bei Werkstücken, deren Kernlage Holzspäne oder Holzfasern aufweist, wird auf diese Weise ein Aufquellen der später aufgetragenen Beschichtung vermieden, falls Feuchtigkeit zwischen diese und die Kernlage gelangen sollte. Ferner erfordert der Auftrag der hydrophobierenden Flüssigkeit keine Nachbearbeitung in Vorbereitung zum Aufbringen des Beschichtungsmaterials. Da die hydrophobierende Flüssigkeit in die Poren und/oder Haarrisse der zu beschichtenden Kante eindringt und einen Schutzfilm ausbildet, jedoch in unwesentlicher Menge oder im wesentlichen nicht an der zu beschichtenden Oberfläche verbleibt, können auch dünne Beschichtungsmaterialen aufgetragen werden, ohne dass ein mit der hydrophobierenden Flüssigkeit behandelter Abschnitt sichtbar wäre.

Ferner wird eine Ausführungsform bereitgestellt, bei der die auf das Werkstück aufgebrachte hydrophobierende Flüssigkeit vor dem Aufbringen der Beschichtung durch Wärmeeinwirkung, insbesondere im Bereich von 30-150°C, behandelt wird. Ggf. kann die Temperatur je nach Werkstückart gewählt werden, um die bei diesen Werkstücken geeigneten Eigenschaften der Flüssigkeit exakt einzustellen. Bei einer bestimmten Werkstückart wird die Temperatur bevorzugt konstant gehalten, um eine gleichbleibende Qualität sicherzustellen.

Gemäß einer Ausführungsform des Verfahrens findet das Auftragen der hydrophobierenden Flüssigkeit durch Aufbringen eines Flüssigkeitsfilms oder durch Sprühauftrag statt. Hierbei wird die hydrophobierende Flüssigkeit mit Luft gemischt.

Gemäß einer weiteren Ausführungsform zeichnet sich das Verfahren dadurch aus, dass 2-50 g/lfm, insbesondere 2-5 g/lfm, der hydrophobierenden Flüssigkeit aufgetragen werden. Dies geschieht bevorzugt in einem Bereich von 2-5mm.

Generell ist es bevorzugt, dass der zuvor genannte Bereich vergleichsweise schmal ist, nämlich kleiner als 5mm, bevorzugt 3mm, weiter bevorzugt 2mm. Somit kann die hydrophobierende Flüssigkeit sparsam aufgetragen werden. Eine relativ kleinflächige Behandlung der zu beschichtenden Fläche genügt. Insbesondere liegt diese im Randbereich, also dem Bereich der Kante.

Ferner ist es bevorzugt, dass die hydrophobierende Flüssigkeit eine niedrige Viskosität aufweist. Insbesondere umfasst die hydrophobierende Flüssigkeit eine Viskosität von 4-100 mPaS aufweist, wobei diese üblicherweise bei 20°C angegeben wird.

Gerade bei diesen Viskositäten dringt die hydrophobierende Flüssigkeit gut in Poren und Haarrisse von Werkstücken ein, und kann diese versiegeln.

Gemäß einer Ausführungsform ist die hydrophobierende Flüssigkeit aus einem Zwei- oder Mehrkomponentensystem zusammengesetzt. Dieses kann beispielsweise zeitnah vor dem Aufbringen der hydrophobierenden Flüssigkeit durch Mischen der Komponenten reagieren und seine Eigenschaften entfalten.

Auch ist es bei einer anderen Variante möglich, eine Mischung eines Zwei- oder Mehrkomponentensystems nach dem Auftrag auf dem Werkstück selbst zu bewirken, um die hydrophobierende Flüssigkeit auszubilden.

Eine weitere Variante der vorliegenden Erfindung sieht vor, neben der hydrophobierenden Flüssigkeit eine zweite Komponente vor oder nach dem Auftrag zuzumischen, welche ggf. die Eigenschaften der hydrophobierenden Flüssigkeit beeinflusst.

Ferner betrifft die Erfindung eine Verwendung einer hydrophobierenden Flüssigkeit zur Versiegelung zumindest eines Randbereichs einer zu beschichtenden Werkstückoberfläche. Diese kann eine der zuvor genannten Eigenschaften, insbesondere die genannte Viskosität, aufweisen, und der genannten Wärmeeinwirkung ausgesetzt werden.

Ferner ist die Erfindung auf eine Vorrichtung gemäß Anspruch 9 gerichtet.

In weiteren Ausführungsformen kann die Auftragseinrichtung einen Sprühkopf, ggf. in Kombination mit einer vakuumbasierten Absaugeinrichtung, aufweisen. Beim Aufsprühen wird die hydrophobierende Flüssigkeit mit Luft vermischt. Insbesondere die Kombination mit der Absaugeinrichtung eignet sich bei der Verarbeitung relativ kleiner Mengen, wie dies im Rahmen der Erfindung bevorzugt ist.

Alternativ kann die Auftragseinrichtung mindestens eine Schlitzdüse, insbesondere mit einer vertikalen Schlitzöffnung, oder eine Walze umfassen. Mit diesen kann ein Flüssigkeitsfilm am Werkstück bereitgestellt werden.

Das in den Ansprüchen genannte Verfahren, bzw. die Verwendung sowie die Vorrichtung sind sowohl für den Bereich der Stationärtechnik als auch den Bereich der Durchlauftechnik anwendbar bzw. einsetzbar.

Im Bereich der Stationärtechnik wird das Werkstück während des Bearbeitungsvorgangs, also im vorliegenden Fall die im Rahmen der Beschichtung genannten Arbeitsschritte, zumindest zeitweise gehalten, und das Bearbeitungswerkzeug/aggregat bewegt. Im Bereich der Durchlauftechnik werden die Werkstücke bewegt, wobei auch eine Bewegung des Bearbeitungswerkzeugs/aggregats stattfinden kann.

### Kurze Beschreibung der Zeichnungen

- Fig. 1a: ist eine Draufsicht auf ein Werkstück während einer spanenden Bearbeitung
- Fig. 1b: ist eine Draufsicht auf das Werkstück von Fig. 1, nachdem ein Beschichtungsmaterial auf einer Schmalseite aufgebracht wurde
- Fig. 2a: zeigt das Werkstück in einer Seitenansicht, nachdem ein Haftmittel zur Aufbringung des Beschichtungsmaterials an einer Schmalfläche aufgebracht wurde.
- Fig. 2b: zeigt das in Fig. 2 dargestellte Werkstück mit aufgebrachtem Beschichtungsmaterial

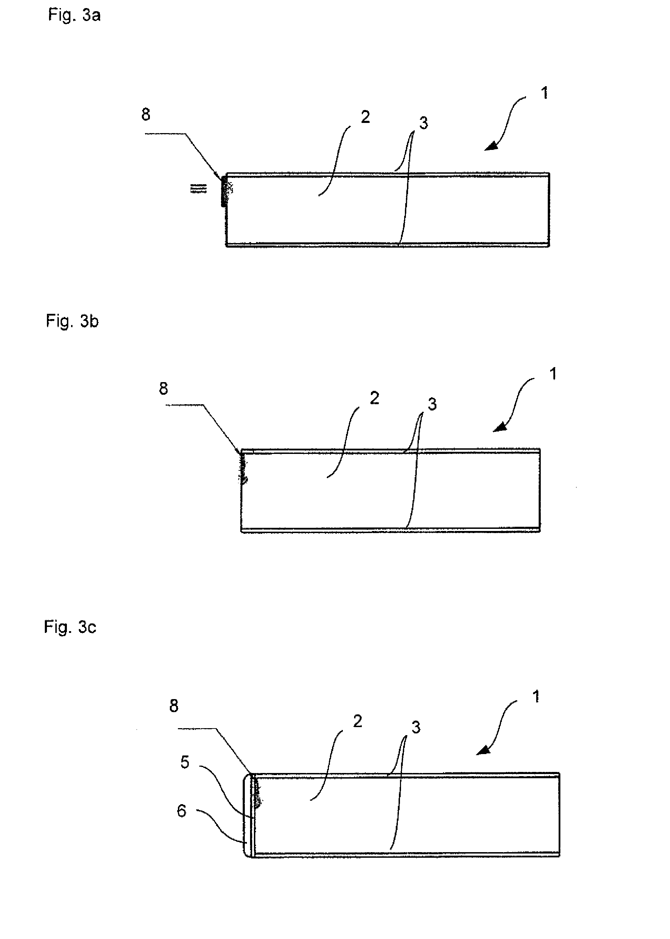

- Fig. 3a-3c: zeigen Fertigungsschritte gemäß einer Ausführungsform der vorliegenden Erfindung

### Detaillierte Beschreibung der bevorzugen Ausführungsformen

Nachfolgend werden bevorzugte Ausführungsformen sowie weitere Modifikationen im Detail erläutert. Dabei ist ersichtlich, dass einzelne Aspekte bestimmter Ausführungsformen bzw. Modifikationen jeweils miteinander kombiniert werden können, um neue Varianten auszubilden.

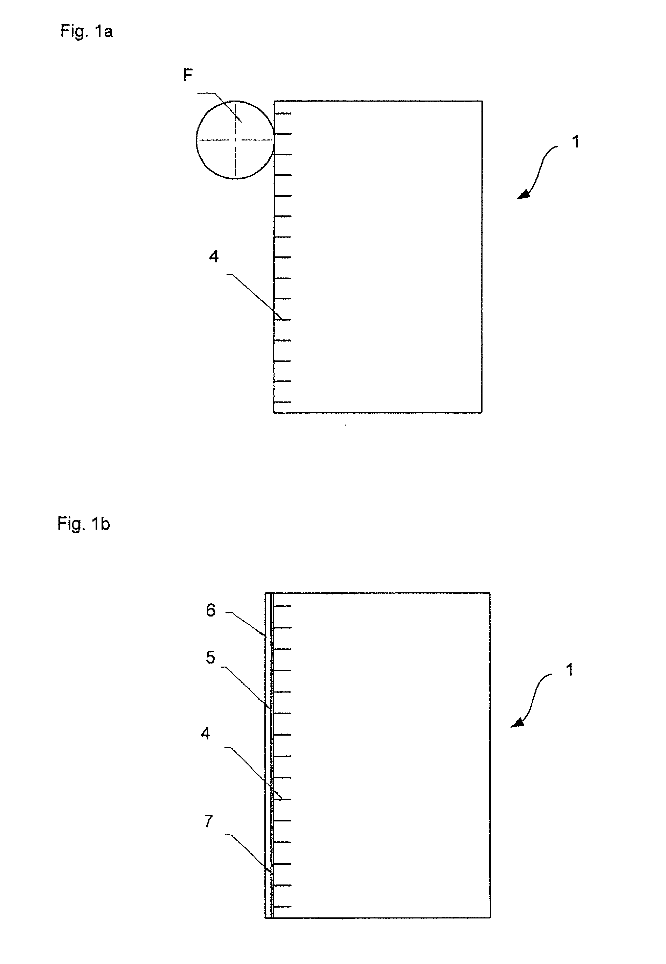

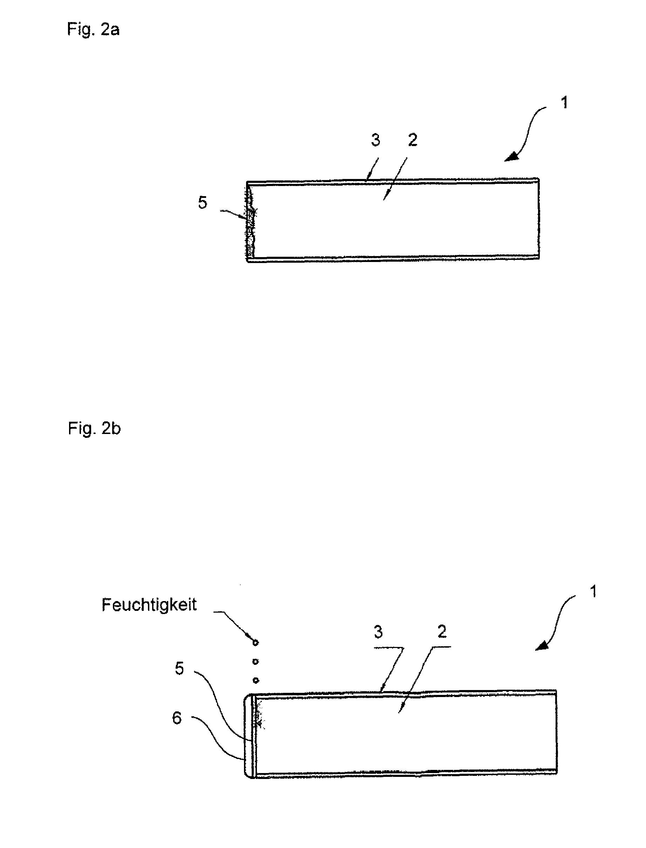

Fig. 1a zeigt eine Draufsicht auf ein Werkstück 1, das an seiner Schmalfläche mit einem Beschichtungsmaterial versehen werden soll. Beim Werkstück 1 handelt es sich im vorliegenden Beispiel um ein Verbundwerkstück mit einer Kernlage 2, die Holzspäne oder -fasern umfasst, und Decklagen 3, die auf den Hauptflächen der Kernlage 2 aufgebraucht sind (siehe hierzu auch Figuren 2a, 2b).

Um das Werkstück 1 für die Beschichtung vorzubereiten, wird die Schmalfläche spanend bearbeitet, im vorliegenden Ausführungsbeispiel mit einem Fräser F. Das Werkstück wird hierzu relativ zum Fräser F bewegt, und ein Abschnitt der Schmalfläche wird spanend abgetragen (Durchlauf). Im Bereich der Stationärtechnik hingegen wird der Fräser relativ zum Werkstück bewegt, während das Werkstück auf einem Auflagetisch gehalten wird.

In Fig. 1a werden schematisch Haarrisse 4 angedeutet, die sich bei der spanenden Bearbeitung an der Schmalfläche der Kernlage 2 ergeben. Alternativ oder zusätzlich können jedoch auch offenporige Bereiche vorliegen.

Im Bereich der Haarrisse 4 wird der Verbund der aus Spänen bzw. Fasern gefertigten Kernlage abschnittsweise gelöst. Allerdings sind in den Figuren 1a und 1b die Haarrisse 4 überdimensioniert dargestellt, um die nachfolgenden Erläuterungen zu veranschaulichen.

Nachdem das Werkstück 1 im Bereich der Schmalfläche vorbereitet wurde, wird ein Haftmittel 5 aufgetragen und ein Kantenmaterial 6 (Beschichtungsmaterial) an die Schmalfläche gepresst. Alternativ ist es auch möglich, das Kantenmaterial in einem vorangegangenen Schritt mit dem Haftmittel 5 zu versehen, und an das Werkstück 1 zu pressen. Ferner sind auch mit Haftmittel vorbeschichtete Kantenmaterialien im Rahmen der vorliegenden Ausführungsform einsetzbar.

Das Haftmittel 5 benetzt die Schmalflächen des Werkstücks 1 und der Kernlage 2, die an der Ober- und Unterseite (Hauptflächen) jeweils mit Decklagen versehen ist. Das Haftmittel 5 dringt dabei teilweise in Poren der Kernlage 2 ein, und versiegelt diese. Allerdings wird ein Eindringen in die Haarrisse 4 oder kleine Poren zumindest teilweise verhindert, da das Haftmittel 5 hierfür u.a. nicht die notwendige Viskosität aufweist.

Wird nun das Werkstück einer feuchten Umgebung ausgesetzt, beispielsweise wenn es sich beim Werkstück 1 um eine Küchenarbeitsplatte handelt, besteht deshalb die Gefahr, dass Feuchtigkeit im Übergangsbereich zwischen dem Kantenmaterial 6 und der Decklage 3 zur Schmalfläche des Werkstücks 1 dringt bzw. durch das Haftmittel hindurch diffundiert. Weist das Werkstück 1 in diesem Bereich Haarrisse auf, oder liegen aufgrund fehlerhafter Bearbeitungsvorgänge Leimfugen 7 vor (diese sind in Fig. 1b angedeutet), so dringt die Feuchtigkeit in den Bereich der Kernlage 2 des Werkstücks 1 vor, was dazu führt, dass die Späne bzw. Fasern aufquellen.

Die vorliegende Erfindung setzt an dieser Stelle an, und stellt einen Verfahrensschritt vor dem Aufbringen des Kantenmaterials 6 auf dem Werkstück 1 bereit, bei dem eine hydrophobierende Flüssigkeit zumindest im kritischen Bereich der Kernlage 2 aufgebracht wird, also im Übergangsbereich zwischen Breit- und Schmalfläche (Werkstückkante).

Diese hydrophobierende Flüssigkeit diffundiert ins Innere der Kernlage 2, und isoliert bzw. schützt die Holzspäne/-fasern vor dem Aufquellen, falls Flüssigkeit in diesen Bereich eindringen sollte.

Die hydrophobierende Flüssigkeit kann nach dem Aufbringen getrocknet und ausgehärtet werden. In diesem Zusammenhang können unterschiedliche Energiequellen zum Einsatz kommen, von denen einige thermische Energie am Werkstück aufbringen können.

Auch wurde festgestellt, dass durch die Wärmeeinwirkung des aktivierten Klebstoffs, der für die Beschichtung der Schmalfläche benötigt wird, die hydrophobierende Flüssigkeit derart niederviskos wird, dass die Flüssigkeit in die Holzteile des Werkzeugkerns hineindringt und diese als eine Art Schutzhülle umschließt, wobei das Eindringen bis zu einer Tiefe von 2-3 mm stattfindet.

Je nach konkreter Ausgestaltung des Werkstücks genügt es, einen relativ schmalen Randbereich der Kernlage 2 des Werkstücks 1 mit der hydrophobierenden Flüssigkeit zu imprägnieren. Hierbei wurde festgestellt, dass ein Bereich von 2-3 mm geeignet ist.

Als Auftragselement wird eine Düse verwendet, die direkt an der Schmalfläche anliegt und mit einem gewissen Druck die Flüssigkeit in die Schmalfläche drängt. Der Düsenaustritt ist ein vertikaler Schlitz, der entweder eine definierte Breite aufweist, oder auch - je nach Anforderung - variabel verstellt werden kann.

Wird beispielsweise an einer Schmalfläche eines Werkstücks ausgehend von den Kanten jeweils ein 2-3mm breiter Abschnitt der Kernlage mit der hydrophobierenden Flüssigkeit benetzt, so ist die Düse gemäß einer Ausführungsform als Schuh ausgebildet, der zwei voneinander beabstandete Schlitzdüsen aufweist. Die Schlitzdüsen, aus denen die hydrophobierende Flüssigkeit austritt, sind so dimensioniert und angeordnet, dass sie jeweils einen 2-3mm breiten Abschnitt der Kernlage des Werkstücks abdecken.

Als hydrophobierende Flüssigkeit können auch Zweikomponentensysteme verwendet werden, wobei die Komponenten vor dem Düsenaustritt zusammengeführt oder sogar aus zwei Düsenaustritten auf das Werkstück aufgebracht werden.

Auch ist ein Auftrag der hydrophobierenden Flüssigkeit mittels eines oder mehrerer Sprühelemente möglich.

## Patentansprüche

1. Verfahren zum Beschichten von insbesondere plattenförmigen Werkstücken, die bevorzugt zumindest abschnittsweise aus Holz, Holzwerkstoffen, Kunststoff oder dergleichen bestehen, mit folgenden Verfahrensschritten:
- Bereitstellen eines Werkstücks (1), welches Werkstück an zumindest einer Werkstückoberfläche, insbesondere Werkstückschmalfläche, zu beschichten ist,
- Auftragen einer hydrophobierenden Flüssigkeit (8) zumindest in einem Randbereich, insbesondere in einem Kantenbereich, der zu beschichtenden Werkstückoberfläche
- Aufbringen eines Beschichtungsmaterials (6), insbesondere eines Kantenbandes, an die zu beschichtende Werkstückoberfläche.

2. Verfahren gemäß Anspruch 1, bei dem die auf das Werkstück aufgebrachte hydrophobierende Flüssigkeit vor dem Aufbringen der Beschichtung durch Wärmeeinwirkung, insbesondere im Bereich von 30-150°C, behandelt wird.

3. Verfahren gemäß einem der vorangegangenen Ansprüche, bei dem das Auftragen der hydrophobierenden Flüssigkeit durch Aufbringen eines Flüssigkeitsfilms oder durch Sprühauftrag stattfindet, wobei der Sprühauftrag bevorzugt in Kombination mit einem vakuumbasierten Absaugen stattfindet.

4. Verfahren gemäß einem der vorangegangenen Ansprüche, bei dem 2-50 g/lfm, bevorzugt 2-20 g/lfm, insbesondere 2-5 g/lfm, der hydrophobierenden Flüssigkeit aufgetragen wird.

5. Verfahren gemäß einem der vorangegangenen Ansprüche, bei dem sich der Randbereich ausgehend von der Werkstückkante 5mm, bevorzugt 3mm, weiter bevorzugt 2mm, erstreckt.

6. Verfahren gemäß einem der vorangegangenen Ansprüche, bei dem die hydrophobierende Flüssigkeit eine Viskosität von 4-100 mPaS aufweist.

7. Verfahren gemäß einem der vorangegangenen Ansprüche, bei dem die hydrophobierende Flüssigkeit aus einem Zwei- oder Mehrkomponentensystem zusammengesetzt ist.

8. Verwendung einer hydrophobierenden Flüssigkeit zur Versiegelung zumindest eines Randbereichs, insbesondere eines Kantenbereichs, einer zu beschichtenden Werkstückoberfläche, insbesondere einer Holzspäne und/oder Holzfasern umfassenden Kernlage (2) eines Werkstücks (1).

9. Vorrichtung zum Beschichten von bevorzugt plattenförmigen Werkstücken, die bevorzugt zumindest abschnittsweise aus Holz, Holzwerkstoffen, Kunststoff oder dergleichen bestehen, mit:
einer Zuführeinrichtung zum Zuführen eines Beschichtungsmaterials (6),
einer Aufbringeinrichtung zum Aufbringen des Beschichtungsmaterials (6) auf ein Werkstück (1),
**gekennzeichnet durch**
eine Auftragseinrichtung für eine hydrophobierende Flüssigkeit.

10. Vorrichtung gemäß Anspruch 9, **dadurch gekennzeichnet, dass** die Auftragseinrichtung mindestens eine Schlitzdüse, insbesondere mit einer vertikalen Schlitzöffnung, oder eine Walze umfasst.

11. Vorrichtung gemäß Anspruch 9, **dadurch gekennzeichnet, dass** die Auftragseinrichtung einen Sprühkopf, ggf. in Kombination mit einer vakuumbasierten Absaugeinrichtung, aufweist.

12. Vorrichtung gemäß einem der Ansprüche 9-11, **dadurch gekennzeichnet, dass** diese eine Energiequelle aufweist, die derart angeordnet ist, dass sie die hydrophobierende Flüssigkeit nach deren Auftrag auf ein Werkstück erwärmt, insbesondere im Bereich von 30-150°C.

13. Vorrichtung gemäß einem der Ansprüche 9-12, **dadurch gekennzeichnet, dass** die Auftragseinrichtung derart ausgebildet ist, dass ein Bereich von 5mm, bevorzugt 3mm, weiter bevorzugt 2mm, mit der hydrophobierenden Flüssigkeit versehen wird.
